# EUROPEAN PATENT SPECIFICATION

(11) **EP 2 969 288 B1**
(45) Date of publication and mention of the grant of the patent: **30.08.2017**
(21) Application number: 14712555.3
(22) Date of filing: 11.03.2014
(51) Int. Cl.: B21D 51/26, G01N 21/90, G01N 21/95

(54) **APPARATUS FOR INSPECTING A METALLIC BOTTLE**
VORRICHTUNG ZUR INSPEKTION EINER METALLFLASCHE
APPAREIL POUR L'INSPECTION D'UNE BOUTEILLE MÉTALLIQUE

(30) Priority: 11.03.2013 US 201313793270
(43) Date of publication of application: 20.01.2016
(73) Proprietor: Rexam Beverage Can Company, Chicago, Illinois 60631 (US)
(72) Inventor: LEITZEN, Doug, Marengo, Illinois 60152 (US); BEVILL, Andrea, Hanover Park, Illinois 60133 (US); PEREZ, Robert P., Gurnee, Illinois 60031 (US)
(74) Representative: Crooks, Elizabeth Caroline
(86) International application number: PCT/US2014/023502
(87) International publication number: WO 2014/164796

(56) References cited:
- JP-A- H09 210 924
- JP-A- 2000 121 580
- JP-A- 2002 156 338
- JP-A- 2008 249 668
- JP-A- 2010 249 541
- US-A- 4 732 027
- US-I5- B 546 631

## Description

### DESCRIPTION

### TECHNICAL FIELD

The invention relates to necking and flanging aluminum bottles; more particularly, the present invention relates to a necking and flanging apparatus having an in-line, continuous, inspection module capable of full-body inspection incorporated therein.

### BACKGROUND OF THE INVENTION

JP 2010 249541 is directed to a can body inspecting device capable of uniformly imaging the inner surface of a can body over the whole periphery thereof and capable of enhancing inspection precision, and a can body inspecting method. In the can body inspecting device for inspecting the inner surface of a bottomed cylindrical can body from the opening side of the can body, a turret having a suction part, which forms a recessed cylindrical surface shape along the outer peripheral surface of the body part of the can body, formed in the rotatable disc shaped outer peripheral part thereof and sucking the body part of the can body by the suction part to feed the can body and a camera which images the can body from the opening side thereof when the can body is fed to an imaging position by the turret are provided and the center axis of the radius of curvature of the suction part is allowed to coincide with the optical axis of the camera.

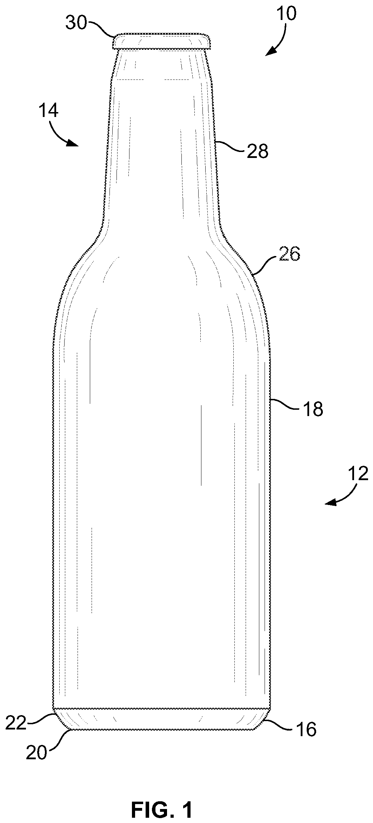

Referring to FIG. 1, bottles 10 produced from metallic materials are becoming more and more popular in the beverage market. These bottles 10 are typically produced from an aluminum alloy because aluminum alloys tend to form well and are capable of maintaining adequate strength even drawn and ironed down to a very thin thickness. A lower portion 12 or body of the metallic bottle includes an enclosed bottom 16 and a cylindrical sidewall 18 extending upwardly from the enclosed bottom portion 16.

The bottom 16 has a dome-shaped center panel surrounded by a generally circumferential annular support 20. An outer wall 22 extends radially outwardly and upwardly relative to the annular support 20 and joins the bottom 16 with the lowermost portion of the cylindrical sidewall 18.

The cylindrical sidewall 18 is centered about the longitudinal axis. The sidewall 18 is generally smooth and flat; however, any one of a number of forming techniques can be employed to impart a shape and/or texture to the sidewall 18. For instance, the interior of the sidewall 18 could be forced outwardly by a fluid pressure or forming segments, laser treatment could be employed to etch or otherwise mark the sidewall 18, and/or flutes or other designs may be imparted onto the sidewall 18 through mechanical deformation of the sidewall 18.

An upper portion 14 of the bottle 10 includes a circumferential shoulder portion 26. The shoulder 26 has a convexly curved appearance when viewed from a vantage point external to the container 10. The shoulder 26 has a lowermost point integral with an uppermost portion of the cylindrical sidewall 18. The transition point between the sidewall 18 and shoulder 26 is at a point where the can body 10 begins to curve radially inwardly. Stated another way, the diameter of the container body 10 begins to decrease at the point where the shoulder 26 begins and the sidewall 18 ends.

It is believed that the radius of curvature of the shoulder 26 is important for the aesthetic appearance of the container 10 as well as for the strength of the container 10.

The shoulder 26 has a smoothly tapered appearance. This appearance is achieved through a die forming technique similar to the die forming technique disclosed in commonly assigned U.S. Patent No. 5,497,900 which is hereby incorporated by reference as if fully set forth herein. The smoothly tapered appearance differs from containers produced using alternative methods like spin-necking in that the radius of curvature is much greater so that wrinkles and scratches are avoided as is the unsightliness of an abrupt reduction in the diameter of the container caused by a sharp corner or bend at the shoulder. Thus, a vertical length of the shoulder 26, parallel to the longitudinal axis, is greater than the vertical length of shoulders produced through other forming techniques.

The upper portion 14 further includes an inwardly tapered circumferential neck 28. The neck 28 has a lowermost portion integral with an uppermost portion of the shoulder 26. Thus, the neck 28 functions to further decrease the diameter of the container 10 along the vertical length of the neck 28. The neck 28 is typically substantially flat, i.e. primarily free of an arc-shape design, although it may have some discontinuity formed during production. It is entirely possible that future generations of such containers may have curved necks 28 and curved sidewalls 18, and the present invention is particularly useful in producing and inspecting same as will be described in detail below.

The upper portion terminates at a flange 30 which is adapted for receiving a cap or closure member.

U.S. Patent No. 5,497,900 describes a die necking method for necking can bodies. The method of the '900 patent contemplates forming a cylindrical neck portion adjacent the cylindrical open end of a container so that the cylindrical neck merges with the cylindrical side wall through a generally smoothly tapered neck portion. The tapered neck portion between the cylindrical neck portion and the cylindrical container side wall initially is defined by a lower, generally arcuate segment having a relatively large internal curvature at the upper end of the cylindrical side wall and an upper, generally arcuate segment having a relatively large external curvature at the lower end of the reduced cylindrical neck. A further tapered portion is then formed at the open end and is forced downwardly while the cylindrical neck is further reduced. The further tapered portion freely integrates with the second arcuate segment which is reformed and the tapered portion is extended. This process is repeated sequentially until the cylindrical neck is reduced to the desired diameter and a smoothly tapered necked-in portion is formed on the end of the side wall. In each necking operation, the tapered portion is not constrained by the die and is freely formed without regard to the specific dimensions of the die transition zone.

The container that is formed by the above die necking process has an aesthetically-pleasing appearance, greater strength and crush resistance and is devoid of the scratches or wrinkles in the neck produced in a spin necking operation. Similar methods are still used today.

Even with an increased number of necking operations, small wrinkles may form on or near the open edge of the can. These wrinkles may be ironed out during subsequent necking operations by forcing the edge of the can between the cylindrical upper portion of the necking die and the floating pilot member. The ironed out wrinkles create localized regions exhibiting increased work hardening that are generally more brittle than adjacent areas and may fail (i.e. fracture or crack) when the open end is flanged.

Wrinkles become even more prevalent as the container sidewall is down-gauged. To avoid wrinkling, four to six additional necking operations may be required. Additional necking operations, however, require additional manufacturing space, pressurized air, electricity, and manufacturing time. Thus, adding additional necking operations is cost prohibitive.

Currently, aluminum bottles 10 are inspected individually by hand. That is, a prescribed number of aluminum bottles are removed from pallets, inspected by manufacturing plant personnel for wrinkles, cracks, dents, pleats, and/or fractures, and palletized again or repalletized. The prescribed number is up to 100% of the manufactured aluminum bottles. It is important for the inspection to take place over the entire circumference of the bottle and the entire height or a portion of the entire height of the container to ensure compliance with quality standards, which can include container decoration and/or ink printing which takes place prior to necking and flanging. This process is time consuming, labor intensive, and subject to human error. Moreover, due to the speed of manufacturing and the frequency of inspection or sampling, such manual inspection is a manufacturing bottleneck unless a large population of human inspectors is employed. In beverage production manufacturing, defects are typically measured in defective parts per million, making it difficult to cull or locate defective beverage can bodies by hand. Therefore, human inspection is inefficient, ineffective, costly, and subject to mistakes.

There are no known automated inspection apparatuses that can efficiently and accurately inspect a full 360° of an aluminum bottle in a timely and cost efficient manner.

The present invention is provided to solve the problems discussed above and other problems, and to provide advantages and aspects not provided by prior necking and flanging apparatuses of this type. A full discussion of the features and advantages of the present invention is deferred to the following detailed description, which proceeds with reference to the accompanying drawings.

### SUMMARY OF THE INVENTION

One aspect not forming part of the present invention is directed to an apparatus for continuously reforming an open end of a metallic can body as described above. The apparatus comprises a plurality of sequentially aligned necking stations, a flanging station, an inspection station, and a plurality of transfer wheels. The plurality of sequentially aligned necking stations each reduce a diameter of an open end of a metallic beverage container body wherein a subsequent necking station reduces the diameter of the open end of the metallic beverage container a degree or amount beyond a reduction in the diameter taken at a previous necking station. The flanging station is sequentially aligned with a last of the plurality necking stations wherein the open end of the metallic beverage container is further reformed by the flanging station. The inspection station is sequentially aligned with the flanging station and comprises an image recorder for capturing a plurality of images about a circumference of the metallic beverage container as the metallic beverage container completes one full rotation about a generally vertical axis during a dwell period. The plurality of transfer wheels are sequentially aligned with the plurality of necking stations, the flanging station, and the inspection station. The transfer wheels sequentially transfer the metallic beverage container between each of the plurality of necking stations, the flanging station, and the inspection station.

The apparatus may further comprise a computer system having a memory in communication with the image recorder and receiving images of the beverage container from the image recorder. The apparatus may further comprise a first software routine stored in the memory for stitching the plurality of images together to form a composite of a circumference of each metallic beverage container. The apparatus may further comprise a second software routine stored in the memory for identifying manufacturing defects on the composite. The inspection station may have an ejector positioned along an indexed path and activated by a software routine stored in the memory of the computer system wherein activation of the ejector removes an individual beverage container from the inspection station when a software routine identifies a manufacturing defect on the individual beverage container. The ejector may receive a fluid pressure from a source of fluid pressure in response to a signal originating from the computer system. The ejector may be a blow-off nozzle.

Another aspect not forming part of the present invention is directed to an apparatus for continuously reforming an open end of a metallic can body as described above. The apparatus comprises a circumferential first indexer and an image recorder. The first indexer sequentially transports a plurality of metallic beverage containers from a first location to a second location along an indexed path which has a plurality of dwell positions. Each of the plurality of metallic containers pauses at a dwell position for a predetermined time interval as each of the plurality of metallic beverage containers is sequenced from the first location to the second location. The first indexer comprises a plurality of turntables. Each turntable supports an enclosed bottom portion of the metallic beverage container and is rotational about a generally vertical axis for transferring rotation to the metallic beverage container. Each turntable is transferred by the first indexer along the indexed path from the first location to the second location. The image recorder is aimed at one of the dwell positions for capturing a plurality of images about a circumference of each of the plurality of metallic beverage containers as each of the plurality of metallic beverage containers completes at least one full rotation about the generally vertical axis during the predetermined time interval.

The apparatus may further comprise a computer system having a memory wherein the computer system is in communication with the image recorder and receives images of the beverage container from the image recorder. The apparatus may further comprise a software routine for stitching the plurality of images together to form a composite of a circumference of each metallic beverage container. The apparatus may further comprise a software routine for identifying manufacturing defects on the composite. The apparatus may further comprise an ejector positioned along the indexed path and activated by a software routine stored in the memory of the computer system wherein activation of the ejector removes an individual beverage container from the inspection station when a software routine identifies a manufacturing defect on the individual beverage container. The ejector may receive a fluid pressure from a source of fluid pressure in response to a signal originating from the computer system. The ejector may be a blow-off nozzle.

The invention is directed to an apparatus for inspecting a metallic beverage container having a closed bottom opposite an open end, and a cylindrical sidewall extending upwardly from the bottom to a circumferential shoulder according to claim 1.

Another aspect not forming part of the present invention is directed to a method of inspecting a metallic beverage container having a closed bottom opposite an open end, a cylindrical sidewall extending upwardly from the bottom to a circumferential shoulder, and a neck of reducing diameter extending upwardly from the shoulder. The method comprises the steps of: (1) sequentially transporting a plurality of metallic beverage containers from a first location to a second location along an indexed path having a plurality of dwell positions therebetween; (2) pausing transport of each of the plurality of metallic beverage containers at one of the dwell positions for a predetermined time interval; (3) recording a plurality of images of a height from an open end to an opposing closed end of each of the plurality of metallic beverage containers about a full circumference of each of the plurality of the metallic beverage containers; and (4) creating a composite image corresponding to the height and the circumference of each of the plurality of metallic beverage containers from the plurality of images.

The method may further comprise the step of using a software routine to identify manufacturing defects on the composite image. The method may further comprise the step of rotating each of the plurality of metallic beverage containers about a generally vertical axis defined by a center of each of the plurality of metallic beverage containers during the recording step. The method may further include the step of automatically culling a defective beverage container from a plurality of sequentially processed beverage containers. The invention may include an ejector positioned along the indexed path and activated by a software routine stored in the memory of the computer system. Activation of the ejector removes an individual beverage container from the inspection station when the second software routine identifies a manufacturing defect on the individual beverage container. The ejector may receive a fluid pressure from a source of fluid pressure in response to a signal originating from the computer system. The ejector may be a blow-off nozzle.

Another aspect not forming part of the present invention is directed to a method of inspecting a metallic beverage container having a closed bottom opposite an open end, a cylindrical sidewall extending upwardly from the bottom to a circumferential shoulder, and a neck of reducing diameter extending upwardly from the shoulder. The method comprises the steps of: (1) providing a circumferential rotatable indexer; (2) sequentially transporting a plurality of metallic beverage containers from a first location to a second location along an indexed path using the rotatable indexer; (3) pausing transport of each of the plurality of metallic beverage containers at a dwell position for a predetermined time interval; (4) providing an image recorder at the dwell position; (5) providing rotational movement about a generally vertical axis extending through a center of the at least one of the plurality of metallic beverage containers by one of the image recorder or the metallic beverage container; (6) recording a plurality of images of a height from an open end to an opposing closed end of the at least one of the plurality of the metallic beverage containers about a circumference of the at least one of the plurality of the metallic beverage containers during the providing rotational movement step; (7) creating a composite image from the plurality of images corresponding to the height and the circumference of the at least one of the plurality of metallic beverage containers; and (8) using a software routine to identify manufacturing defects on the composite image.

This method may include the following step: automatically culling a defective beverage container from a plurality of sequentially processed beverage containers. The invention may include an ejector positioned along the indexed path and activated by a software routine stored in the memory of the computer system. Activation of the ejector removes an individual beverage container from the inspection station when the second software routine identifies a manufacturing defect on the individual beverage container. The ejector may receive a fluid pressure from a source of fluid pressure in response to a signal originating from the computer system. The ejector may be a blow-off nozzle.

Another aspect not forming part of the present invention is directed to an apparatus for inspecting a metallic beverage container having a closed bottom opposite an open end, and a cylindrical sidewall extending upwardly from the bottom to a circumferential shoulder against a preset quality standard. The apparatus has an entry end and a first rotatable transfer wheel adjacent thereto. The first rotatable transfer wheel has a plurality of pockets, each adapted for receiving a beverage container therein. A rotatable indexer has a plurality of rotatable turntables about a circumference thereof. The rotatable indexer is rotatable about a central hub and each rotatable turntable is about a center axis associated with each rotatable turntable. A second rotatable transfer wheel is opposite the first transfer wheel and also has a plurality of pockets adapted for receiving beverage containers therein. An indexed path of the apparatus is defined by a portion of the plurality of pockets on the first rotatable transfer wheel, a portion of the plurality of rotatable turntables on the rotatable indexer, and a portion of the plurality of pockets on the second transfer wheel. A plurality of image recorders are aimed at the indexed path about the circumference of the rotatable indexer. A control means regulates or controls rotation of the first and second rotatable transfer wheels, the rotatable indexer, and the plurality of turntables. An ejector is located along the indexed path. A computer system comprises a memory which stores and executes a software comprising a first routine controlling the means for rotating, a second routine controlling the plurality of image recorders, a third routine comparing beverage container images against a preset quality standard, and a fourth routine for activating the ejector to remove a defective beverage container from a cue of beverage containers traversing the indexed path.

The ejector may receive a fluid pressure from a source of fluid pressure in response to a signal originating from the computer system. The ejector may be a blow-off nozzle. The apparatus may further comprise a software routine stored in the memory for stitching a plurality of images received from the cameras together to form a composite of a circumference of each metallic beverage container.

Another aspect not forming part of the present invention is directed to an apparatus for inspecting a metallic beverage container having a closed bottom opposite an open end, a cylindrical sidewall extending upwardly from the bottom to an open end. This apparatus comprises a circumferential indexer for sequentially transporting a plurality of metallic beverage containers in a queue from a first location to a second location along an indexed path having a plurality of dwell positions wherein each of the plurality of metallic containers pauses at the dwell positions for a predetermined time interval as each of the plurality of metallic beverage containers is sequenced from the first location to the second location. The indexer comprises a plurality of chucks. Each chuck supports an enclosed bottom portion of the metallic beverage container and is rotational about a generally horizontal axis for transferring rotation to the metallic beverage container. Each chuck is further transferred by the first indexer along the indexed path from the first location to the second location. An image recording array is associated with one of the dwell positions which is located within a field of vision of the image recording array for capturing a plurality of images about a circumference of each of the plurality of metallic beverage containers as each of the plurality of metallic beverage containers completes at least one full rotation about the generally horizontal axis during the predetermined time interval.

The apparatus may further comprise a computer system having a memory. The computer system is in communication with the image recording array and receives images of the metallic beverage container from the image recording array. The apparatus may further comprise a first software routine for stitching the plurality of images together to form a composite of a full circumference of each metallic beverage container. The apparatus may further comprise a second software routine for identifying manufacturing defects on the composite. The apparatus may further comprise a rejection position located along the indexed path wherein a third software routine stored in the memory of the computer system controls a force maintaining the metallic beverage container to the chuck wherein an individual metallic beverage container is removed from the inspection station when the second software routine identifies a manufacturing defect on the individual metallic beverage container. The apparatus may further comprise a source of a fluid pressure for removing the metallic beverage container from the chuck in response to a signal originating from the computer system. The apparatus may inspect metallic beverage containers at a rate of 200 containers per minute, in other words, creating a composite image step is repeated at least 200 times per minute. The apparatus may have an inspection rate of at least 300 metallic beverage containers per minute.

Other features and advantages of the invention will be apparent from the following specification taken in conjunction with the following drawings.

### BRIEF DESCRIPTION OF THE DRAWINGS

To understand the present invention, it will now be described by way of example, with reference to the accompanying drawings in which:
FIG. 1 is a side view of a metallic bottle;
FIG. 2 is a schematic representation of a prior art necking and flanging apparatus comprising a plurality of necking modules, at least one flanging module, and at least one reforming module;
FIG. 3 is a schematic representation of a necking and flanging apparatus of the present invention comprising a plurality of necking modules, at least one flanging module, at least one reforming module, and an inspection module.
FIG. 4 is a perspective view of an inspection module;
FIG. 5 is a top view of the inspection module of FIG. 4;
FIG. 6 is a perspective view of an inspection station showing an ejector in the form of a blow-off nozzle;
FIG. 7 is a schematic view of a processing sequence featuring a necking and flanging apparatus sequentially aligned with a washing station and an inspection station ;
FIG. 8 is a perspective view of a horizontal inspection station ;
FIG. 9 is a front view of the inspection station of FIG. 8; and
FIG. 10 is a top view of the inspection station of FIG. 9.

### DETAILED DESCRIPTION

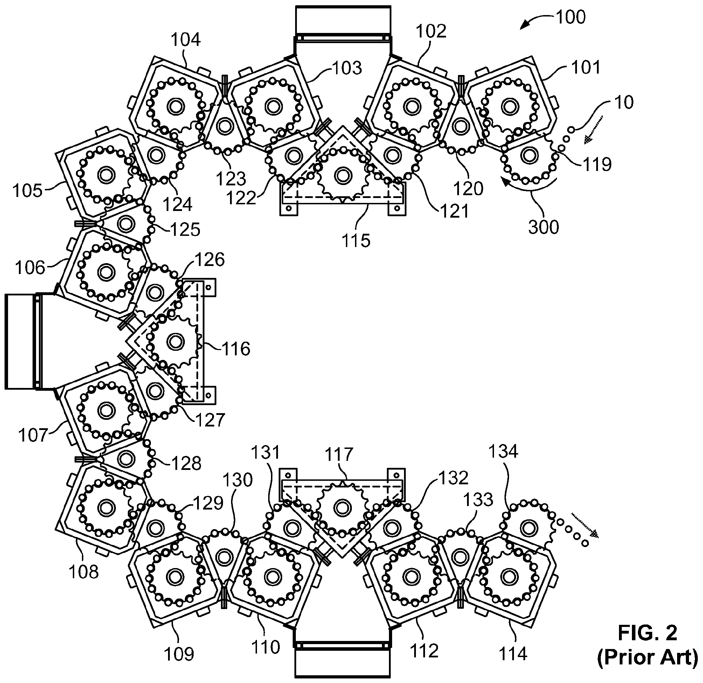

Referring to FIG. 2, a prior necking and flanging apparatus 100 for reducing a diameter of an open end of a metallic beverage container is illustrated. FIG. 2 depicts metal container bodies 10 being fed along an indexed path 300. This prior art apparatus has a plurality of necking stations. Ten such stations are shown, identified by numerals 101-110, respectively. A flanging station 112 and a reformer station 114 are also shown. Three drive stations 115-117 drive the necking and flanging apparatus 100. Sixteen transfer wheels 119-134 move the containers sequentially and in a serpentine indexed path 300 through the various necking, flanging and reformer stations. The transfer wheels 119-134, as well as the necking, flanging, and reformer stations have gears in mesh with each other to produce a synchronized continuous drive means for all of the components.

A variable-speed drive feature of the drive stations 115-117 allows automatic increase and decrease speeds to match the quantity of containers flowing through the apparatus to the flow in the remainder stations of the apparatus. The variable-speed drive also allows an operator to accurately index the components of the system relative to each other, including managing dwell times at each station during which a beverage container is processed, e.g. receiving a reduction in the open end diameter by treatment with a set of forming tools.

Each of the necking station modules 101-110 are substantially identical in construction so as to be interchangeable, and can be added to or subtracted from the system depending upon the type of container that is to be formed. Each of the necking station 101-110 has a plurality of circumferentially-spaced individual, substantially identical necking substations. The number of stations and substations can be increased or decreased to provide the desired necking operation for various sizes of cans. This process is well known in the art. See, for example, U.S. Patent No. 5,497,900.

The arrangement of FIG. 2 shows cylindrical metal container bodies 10 which are made of conventional materials in any conventional manner, being fed sequentially by suitable conveyor means (not shown) into the necking and flanging apparatus 100. The conveyor means feeds the containers 10 to a first transfer wheel 119, as is known in the art. The containers 10 are then fed serially through the various stations by the remaining interconnecting transfer wheels 120-134.

More specifically, the first transfer wheel 119 delivers containers 10 to the first necking station 101, where a first necking operation is performed on the container. The containers 10 are then delivered to a second transfer wheel 120 which feeds the containers 10 to a second necking station 102 where a second necking operation is performed on the container 10. The container 10 is then removed from the second station 102 by a third transfer wheel 121 and fed to a third necking station 103 where a third necking operation is performed.

The containers 10 are then sequentially moved through the fourth through tenth necking stations 104-110 to complete the necking operation. The necked containers 10 are next moved by transfer wheels 131,132 and drive station 117 to a flanging station 112 where a radially outwardly-directed flange 30 is produced on the container 10, as is well known in the art, and is delivered to a transfer wheel 133 for delivery to a reformer station 114 where a bottom portion of the container is reformed to impart additional strength to the container.

All of the moving members in the necking, flanging and reformer stations are driven by a drive stations 115-117, each of which includes a variable-speed motor connected to an output transmission. As will be discussed later, these motors can be controlled by a programmable controller housed, e.g., on a computer system to control the timing of the apparatus. Each of the transfer wheels 119-134, as well as the necking, flanging and reformer stations have gears in mesh with each other to produce a synchronized continuous drive means for all of the components.

The variable-speed drive feature of drive stations 115-117 allow automatic increase and decrease of speed to match the quantity of containers flowing through the apparatus 100 to the flow in the remainder of the container line. The variable-speed drive also allows the operator to accurately index the components of the system relative to each other.

The present invention is primarily aimed at detecting manufacturing defects exhibited by an aluminum bottle after labeling and subsequent to necking, flanging and reforming as described above. Accordingly, the inventors contemplate that an inspection station as will be described below can be incorporated into the manufacturing process as an additional station or separate machine in a necking and flanging apparatus as described above. The description set forth below is consistent with that design. However, the inventors further contemplate that the inspection station 150 described below can be incorporated into almost any desired step of the aluminum bottle making process prior to palletizing the containers due to the handling and transport mechanisms associated with the invention and the great flexibility of the inspection speed and aluminum bottle transport associated therewith. In such a manufacturing process, beverage containers are typically transferred from station to station by transfer wheels, conveyors, or some combination of the two and incorporation of the inspection station 150 can be achieved by sequentially aligning the inspection station at any point in the process.

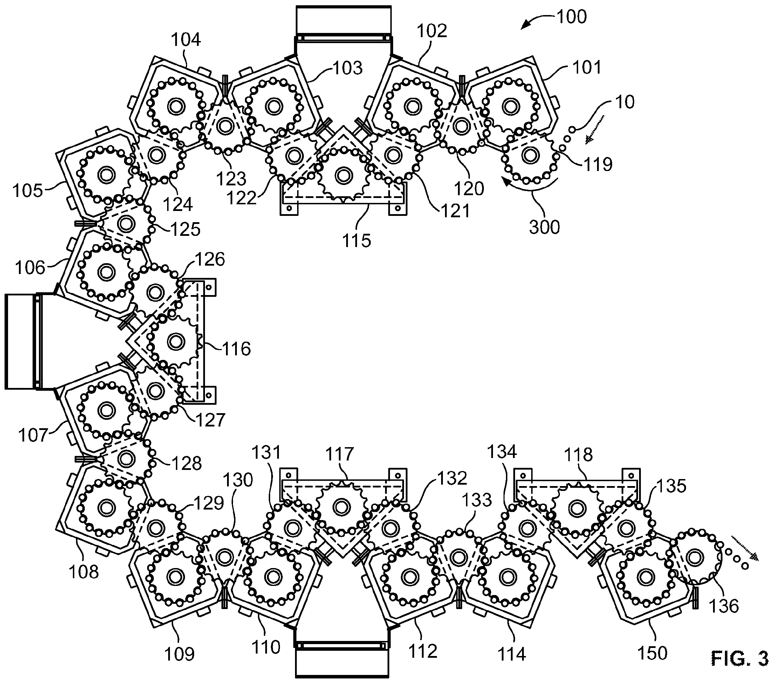

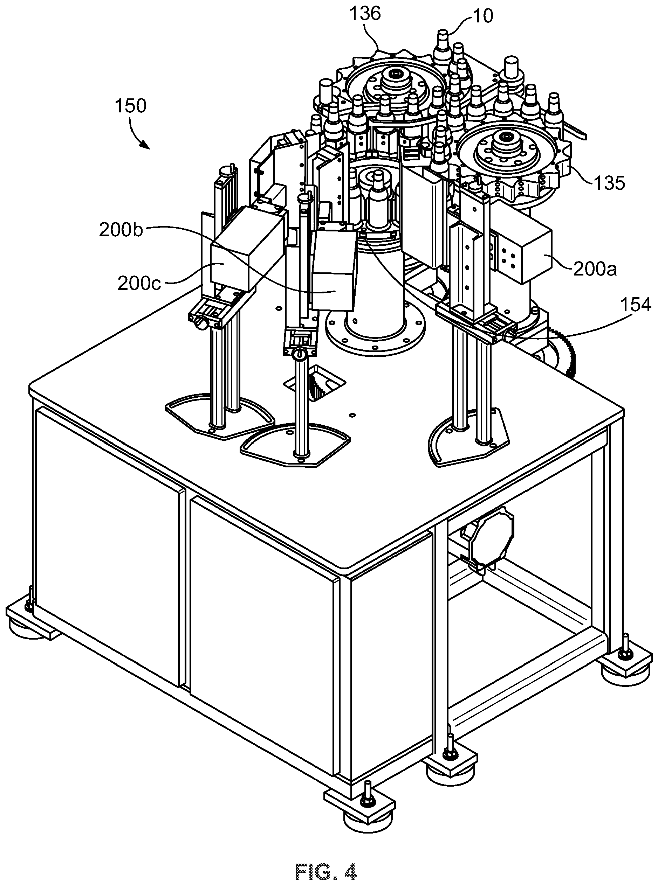

Now referring to FIGS. 3-5, principles of the present invention are illustrated. The present invention comprises a necking and flanging apparatus 100 having an additional in-line inspection station 150 which receives containers 10 sequentially in the manner described above. Accordingly, the schematic apparatus of FIG. 2 is identical to the schematic representation of FIG. 3, with the following exception. In FIG. 3, the apparatus 100 has an additional drive station 118 in operational communication with transfer wheel 134, two additional transfer wheels 135,136, and an additional inspection station 150 for automated inspection of the beverage container following the reformer station 114.

The inspection station 150 includes image technology to capture and record desired images of the beverage container with one or more image recorders, preferably digital cameras 200a,b,c. Line scan technology may be employed to take a beverage container image. A snap shot photograph of the beverage container is taken as the beverage container 10 or the camera 200a,b,c is rotated to capture images of an entire circumference of the beverage container 10. Preferably, the metallic beverage container 10 is rotated about a center vertical axis at one or more dwell positions during a predetermined time interval wherein indexing of the beverage containers 10 is paused to allow the photographs to be taken as the beverage container is rotated about the center vertical axis. Approximately 1,024 photographs of the beverage container 10 are taken as it is rotating. Beverage containers 10 preferably maintain 1¼ revolutions for taking the preferable number of a plurality of individual photographs. The photographs are stitched together using a software routine to produce a composite image of the beverage container. The photographs are collected by a computer system 204, which may comprise one or more computers and/or controllers in communication with one another, in communication with the cameras 200a,b,c. The software routine is stored in a memory on the computer system 204. Upon execution of the software routine, the composite image is created and outputted by the software. A further software routine may perform a pass/fail analysis on the composite image or any individual photograph or photographs to determine the surface quality of the beverage container 10, primarily the existence or absence of surface defects such as dents, wrinkles, splits, scale, blemishes, and the like.

The individual photographs may capture an image of a section of the circumference of the entire height of the beverage container 10, from the open end to the enclosed bottom portion. Alternatively, the individual photographs may capture an image of a section of a circumference of the beverage container 10 and only a portion of the height of the container. However, in either case, the composite image includes images of at least a portion of the entire height and the entire circumference of the beverage container 10 stitched together to form the composite image. Stated another way, a plurality of images of at least a portion of the height of the beverage container 10 from the open end to the enclosed end and about the entire circumference of the container are recorded and processed to arrive at the composite image.

In another embodiment, the individual photographs are taken of the open end from the flange 30 to the uppermost point of the sidewall 18 to capture images of the areas of the container most prone to forming defects, i.e. splits, wrinkles, scratches, fractures and the like. It should be noted that known automated prior art inspection techniques viewed containers from above downwardly. Therefore, a blind spot would occur in the shoulder region where the container undergoes its greatest amount of diametric reduction going from the sidewall 18 to the reduced diameter neck 28. A camera angle from above could not focus on this area. The present invention eliminates the blind spot of the known prior art.

The inspection station 150 includes an indexer 154 for accepting the beverage containers 10 from a first transfer wheel 135 and sequentially transferring the beverage containers 10 along an indexed path comprising a plurality of dwell positions to a second transfer wheel 136 and delivery from the inspection station 150 to an exit conveyor (not shown) of the apparatus 100.

The indexer 154 of the present invention is circumferential and rotates about a central axis. It has a plurality of pockets 158 adapted, as in sized and shaped, to support, control, and properly align the sidewall of the beverage container 10 therein and to prevent misalignment of the beverage container through the inspection process. Each pocket has a turntable associated therewith, preferably a rotatable vacuum chuck 164 which utilizes a vacuum pressure to maintain the beverage containers 10 in position as the indexer 154 indexes or transports the beverage containers 10 through an inspection process as described above. Thus, the vacuum chucks 164 are each in fluid communication with a source of fluid pressure. The vacuum pressure is used to attach each beverage container 10 to the turntables. The vacuum chucks 164 are rotatable about an upright axis that is at least a substantially vertical axis, preferably a vertical axis. The rotation of the vacuum chuck imparts a similar rotation to an upright or substantially vertical beverage container 10. The vacuum chucks 164 further include a chuck nose that fits within a bottom domed portion of the beverage container 10 to further support the beverage container 10 through the inspection process.

The vacuum chucks 164 are substantially free-wheeling. This enables a spinner belt 168 wound around a plurality of idler pulleys 172 to impart rotational movement to the beverage containers 10 attached to the vacuum chucks 164. One of the idler pulleys 172 is operably joined to a spinner motor which in turn drives the spinner belt 168. The spinner motor may be an AC motor.

The spinner belt 168 is preferably a five mm pitch timing belt and the pulleys 172 are five mm pitch. This spinner belt represents a new way to use a timing belt. Usually a timing belt is used to make sure that pulleys move at the same time and at the same rate. The inventors use it to actually drive the vacuum chucks 164, and they are all being tracked by a common encoder.

The encoder tracks rotational movement of the indexer turret and communicates the information to the computer for positional control. It communicates by taking the angular velocity of the pulley shaft and converting the information to digital data for use by the computer. There are actually two encoders, one for the indexer turret and one for the turntable information.

As shown, 8 vacuum chucks 164 are driven by the belt 168, achieving an identical angular rotation. One advantage of this timing belt system allows the beverage containers 10 to be stationary (i.e. not spinning) at infeed and discharge. Because they are not spinning, a vacuum can be used to pick up the beverage container 10. The angular rotation remains constant between the 8 vacuum chucks 164. This also reduces potential beverage container 10 damage.

The inspection station 150 runs at 300 cans per minute or more. This is based on the combined move time and dwell time required by the process. As the move time and the dwell time are reduced, throughput is increased. In the future, the inventors contemplate that this invention will be capable of inspecting 400 to 600 containers per minute. If more limited inspection is performed, the number of inspections may exceed 1000 to 2000 containers per minute. A servo motor is used to control dwell and index time. Thus, the speed of the index and output of the software can be increased with decreased image or photograph acquisition time without swapping out parts of the apparatus.

Most available camera inspection systems are fixed speed. One advantage of the present apparatus is that a user can adjust the dwell time for the cameras 200a,b,c due to servo control. It follows that a user may also slow the rate or dwell down if more time is needed. Thus, a user may increase and decrease the rate as necessary or desires. Therefore, as camera technology improves and images can be obtained in less dwell time, the present inspection station 150 can automatically get faster. For example, as the inspection station index rate is increased, the rate at which the beverage containers 10 rotate must also be increased to ensure that more than 360 degrees of photos are taken around the beverage container 10. The adjustability of the dwell and index rate is one of the advantages of the servo technology.

A programmable controller which may be included with the computer system 204 is in communication with the inspection station 150 and the one or more servo motors which drive the indexer 154 and the transfer wheels 135,136 on the inspection station 150. It can be used to program the indexer 154 to any predetermined dwell time independent of the speed of the necking and flanging apparatus 100 or in conjunction therewith to ensure a continuous processing of beverage containers 10 through the apparatus 100 without any one station moving slower than another. In other words, the inspection station 150 is not a bottleneck operationally to the apparatus 100. Thus, inspection station 150 can be programmed based on time without mechanical intervention. This is very important as other technology improves.

It should be understood that the inspection station 150 is programmable, and any number of dwell time preferences can be achieved on the same station 150 without the need for mechanical changes to the station 150.

Furthermore, the controller is capable of synchronizing the movement of the indexer 154 with the overall apparatus 100. It generally follows that the programmable controller which may be housed on the computer system 204 can be used to control the timing of not only the inspection station 150 but also the entire apparatus to ensure a smooth flow and processing of beverage containers 10 without unnecessarily long dwell times wherein containers 10 rest without being formed, reformed, flanged, or inspected. In other words, addition of the inspection station 150 into the apparatus 100 does not cause the apparatus 100 to require additional mechanical timing cams or other means, as timing can be controlled by the servos and one or more programmable controllers, such as one included on computer system 204.

In one embodiment, a processing time is 200 msec times 15 pockets per turret (i.e. 15 chucks 164), having a 24 degree index, yields inspection of 300 containers per minute. The beverage containers 10 are transported to the transfer wheel 135 and indexed to a transfer point to a vacuum chuck 164 on the indexer 154. Each beverage container 10 rotates on the vacuum chuck 164 for at least a full 360 degree inspection.

The present invention uses line scan technology. It will take 1,024 pictures per beverage container 10. This allows the apparatus to take a strip of the beverage container 10 at high resolution and build a composite image of 360 degree of the beverage container 10 one strip at a time. This allows the current apparatus to detect smaller defects.

For typical beverage cans, only a small uppermost portion of the can is necked radially inwardly. So for cans, the static technology only has to look at a small portion of the can, so it works well enough. However, for beverage containers 10 like those shown in FIG. 1, there is a much longer neck, so there is more area of the beverage container 10 that must be inspected. The present inspection station 150 allows increased inspection without adversely affecting the overall speed or output of the necking and flanging apparatus 100. This is a very desirable advantage achieved by the apparatus of the present invention.

Furthermore, with a typical straight wall beverage can, an inspection device need only look downwardly to image the entire sidewall of the beverage can and defects can be seen from the inside looking radially outwardly. But with a beverage container 10 of FIG. 1, inspection cannot be performed by looking inside to outside because the neck hole is very small and an inspection device (camera) cannot see down the internal walls of the shoulder 26 and sidewall 18. As described above, the long-necked aluminum bottles have a blind spot created by the long neck 28 and the shoulder 26. The present inspection station 150 eliminates the blind spot.

Current inspection is often performed by hand at a rate of about 10 beverage containers per minute. An inspector currently pulls a beverage container 10 from the production line and manually inspects it for 360 degrees and places it back on the manufacturing line if it passes. Obviously, it is cost prohibitive to inspect every container. However, 100% of the containers 10 receive manual inspection. The present invention will perform 100% inspection at a rate of 1 to 240 cans per minute, which keeps up with the current rate of manufacturing metallic beverage containers 10 that resemble bottles as shown in FIG. 1. Therefore, the inspection station of the present invention relieves a manufacturing bottleneck and/or lowers the cost of production.

It should be noted that more or fewer camera 200a,b,c can be utilized if needed. The inventors contemplate as many as seven cameras for rotating containers and two for stationary containers, for a total of nine cameras. Using additional cameras can help increase the speed of the inspection even greater. Or, different areas of the container can be inspected without losing or sacrificing speed of the overall apparatus 10.

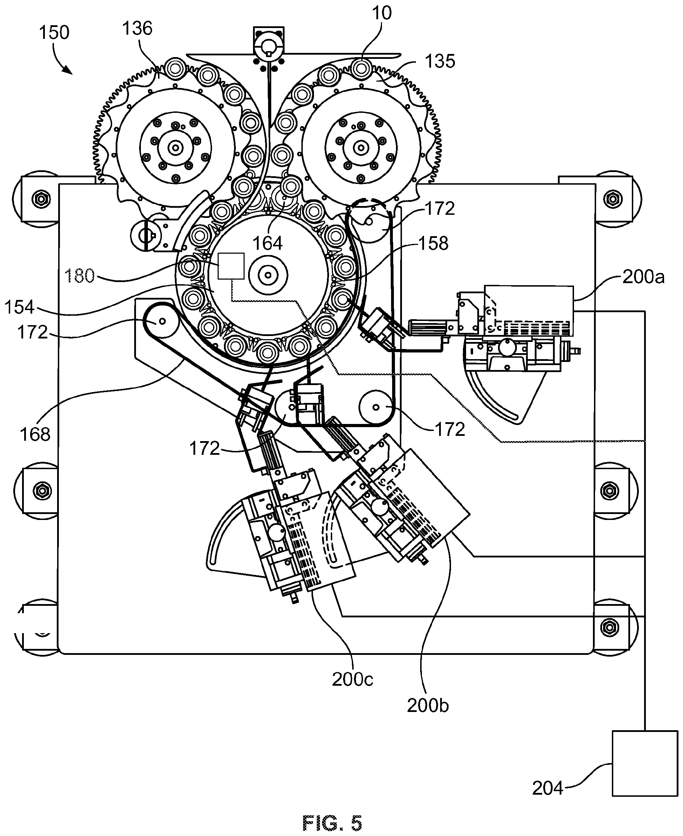

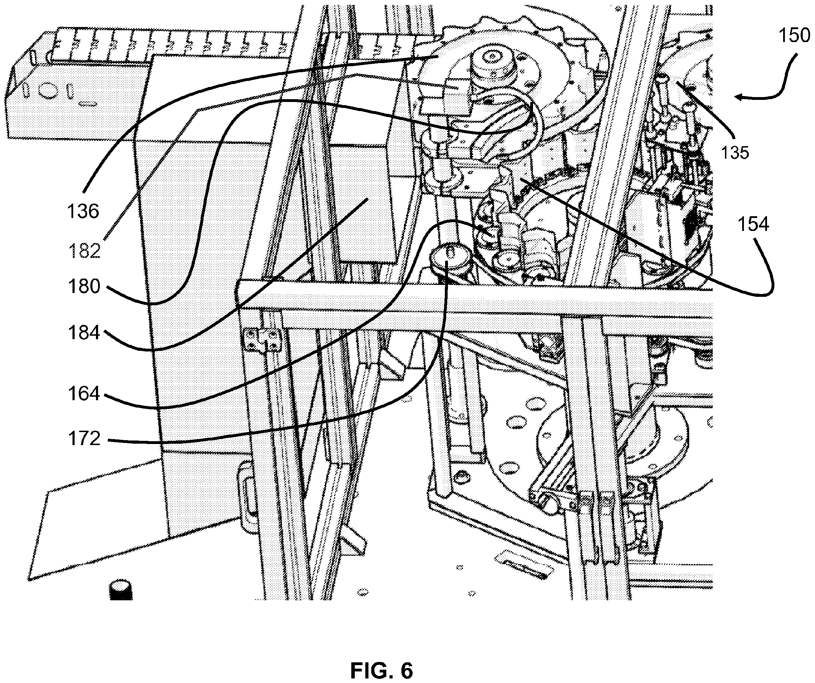

As shown in FIGS. 5 and 6, the inspection station may be outfitted with a rejection system. The can rejection system includes an ejector positioned along the indexed path associated with the indexer 154 for culling an individual beverage container 10 having a detected defect from the manufacturing stream of sequentially processed beverage containers prior to palletizing the defective container. The ejector may be a mechanical spring-loaded kick-out, a mechanical arm, pendulum, plunger, piston, plate, or grasping apparatus, or other mechanical system, but is preferably a blow-off nozzle 180 including a source of fluid pressure 182 in which activation of same is either manually controlled or, more preferably controlled by a signal originating from a software routine stored in the memory on the computer 204 which compares the results of the camera inspection to a quality standard preset by the manufacturer. If, upon comparison of the inspected beverage container to the quality standard, the beverage container 10 is deemed to fail the quality standard, the fluid pressure is activated and delivered through the blow-off nozzle 180 to the beverage container 10 which thrusts the beverage container from the indexer 154 to a reject chute 184 and into a waste area, such as a waste bin.

The ejector is located along the indexed path of the inspection station 150. That is, the ejector is capable of removing a defective beverage container from the cue of beverage containers on the inspection station 150. Accordingly, the ejector is located along the circumference of the indexer 154 after the cameras 200a,b,c but before the second transfer wheel 136.

In terms of processing, a cue of a plurality of beverage containers enters the inspection station at an entry end via the first transfer wheel 135. Each beverage container in the cue is transferred from the first transfer wheel 135 to the indexer 154. Each beverage container is inspected by the cameras 200a,b,c in conjunction with a software routine on the computer system 204. If a beverage container does not meet a quality standard stored on the computer system, the computer system sends a signal to the ejector or source of power at an appropriate time when the defective beverage container is at or near the ejector wherein the ejector removes the defective beverage container from the cue prior to exiting the inspection station 150 at an exit end via the second transfer wheel 136.

In one embodiment, an inspection station 150 is for inspecting a metallic beverage container having a closed bottom opposite an open end, and a cylindrical sidewall extending upwardly from the bottom to a circumferential shoulder against a preset quality standard. The inspection station 150 has an entry end and a first rotatable transfer wheel 135 adjacent thereto. The first rotatable transfer wheel 135 has a plurality of pockets, each adapted for receiving a beverage container 10 therein. A rotatable indexer 154 has a plurality of rotatable turntables 164 about a circumference thereof. The rotatable indexer 154 is rotatable about a central hub and each vacuum chuck 164 is rotatable about a center axis associated with each rotatable vacuum chuck 164. A second rotatable transfer wheel 136 is opposite the first transfer wheel 135 and also has a plurality of pockets adapted for receiving beverage containers 10 therein. An indexed path of the inspection station 150 is defined by a portion of the plurality of pockets on the first rotatable transfer wheel 135, a portion of the plurality of rotatable turntables on the rotatable indexer 154, and a portion of the plurality of pockets on the second transfer wheel 136. A plurality of cameras 200a,b,c are aimed at the indexed path about the circumference of the rotatable indexer 154. One or more motors, preferably servo motors control rotation of the first and second rotatable transfer wheels 135,136, the rotatable indexer 154, and the plurality of turntables. An ejector is located along the indexed path. A computer system comprises a memory which stores and executes a software comprising a first routine controlling the means for rotating, a second routine controlling the plurality of cameras, a third routine comparing beverage container images against a preset quality standard, and a fourth routine for activating the ejector to remove a defective beverage container from a cue of beverage containers traversing the indexed path.

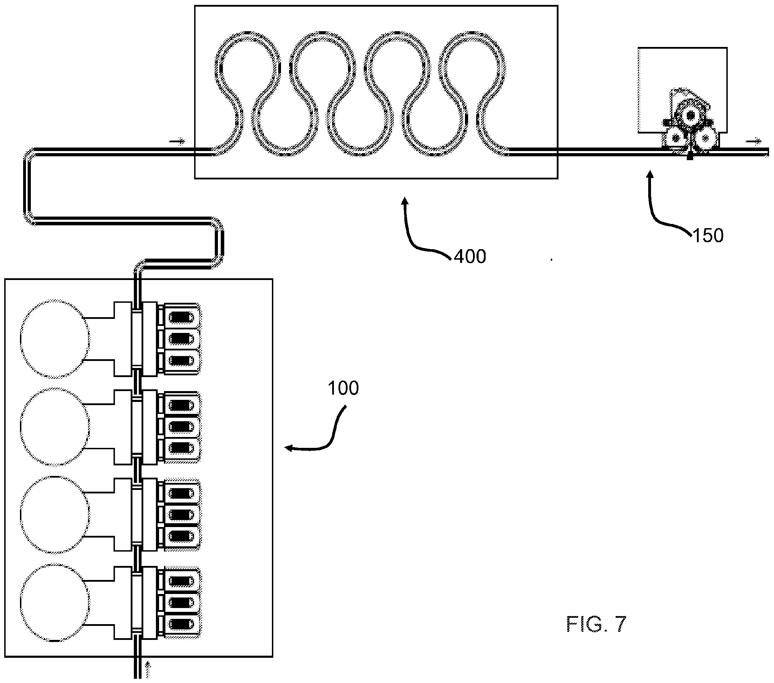

A shown in FIG. 7 and as set forth above, the inspection station 150 can be placed in any physical location prior to palletizing the containers. In FIG. 7, the inspection station 150 is shown sequentially aligned with the necking and flanging apparatus 100 and a washing station 400 which rinses and dries the containers 10 subsequent to forming. Containers 10 are processed in the direction of the arrows and inspected subsequent to necking and washing but prior to palletizing.

The inspection of the beverage container 10 in a vertical orientation is important. Due to the weight distribution of the beverage containers 10 described herein, they cannot be transported well horizontally. In other words, one end of the container is much heavier than the other. The heavy end will drop first. It would be very difficult to transport and inspect the beverage container 10 while it is in the horizontal position because of the uneven weight distribution.

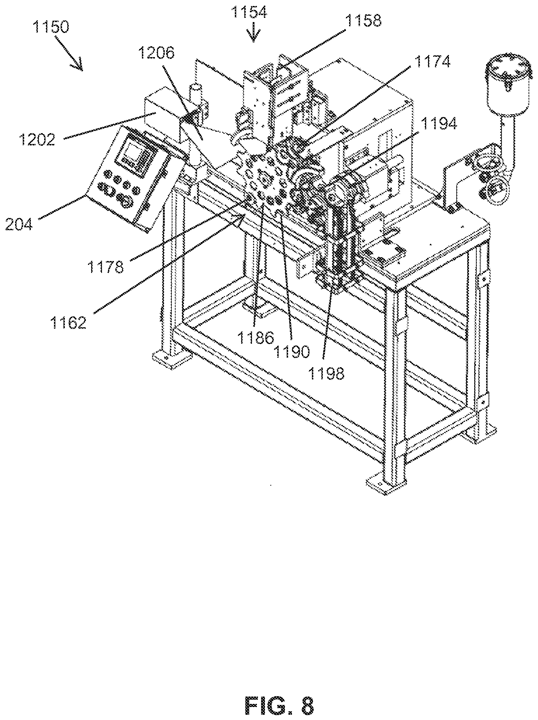

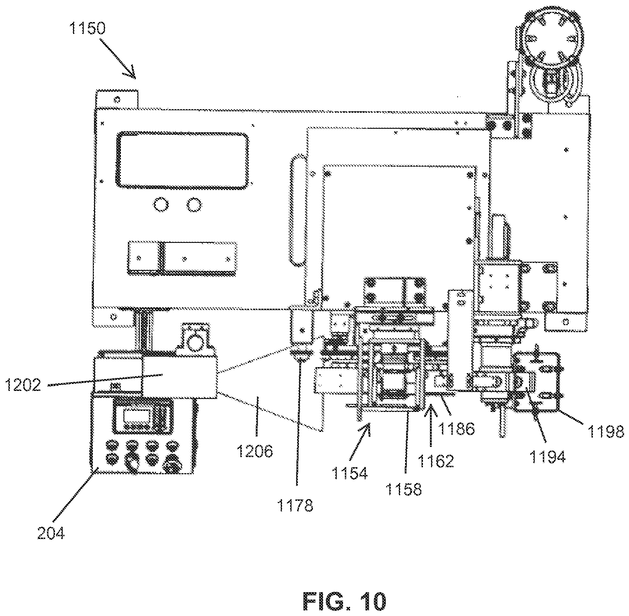

With the above being understood, certain aspects of the present invention are applicable to an inspection system incorporating a horizontal metallic beverage container 10 orientation. For example, a method and apparatus for sequentially and continuously inspecting horizontally oriented metallic beverage containers is illustrated in FIGS. 8-10. One of ordinary skill in the art would understand that features from the vertical inspection station are such as, but not limited to, the computer and software, sequentially processing metallic container bodies in a queue along an indexed path, photo processing and stitching to form a composite image, timing, motors, spinner belts, etc., are readily transferable to the horizontal inspection station described below.

Referring to FIGS. 8-10, an inspection station 1150 is illustrated. This inspection station 1150 is uniquely designed for incorporation within metallic beverage container manufacturing facility to allow for uninterrupted manufacturing of metallic container bodies 1010 wherein the inspection of the metallic container bodies 1010 does not significantly adversely affect the production rate of the metallic container bodies 1010. Preferably, the inspection station 1150 does not affect production at all. Preferably, the inspection station 1150 is incorporated into the sequence or in-line with the manufacturing process, such as, for example, subsequent to spraying the metallic container body 1010 with a protective coating or subsequent to decorating the metallic container body 1010 on a dry offset decorator station or the like.

The inspection station 1150 includes an infeed assembly 1154. The infeed assembly 1154 sequentially and continuously transfers a plurality of metallic beverage container bodies in an individual-type line or queue. The infeed assembly 1154 comprises a chute 1158 which receives the metallic container bodies 1010 in the horizontal orientation and maintains the horizontal orientation by having an internal passageway sized and shaped to accomplish this function. The chute 1158 may receive the metallic container bodies 1010 from a location above the chute 1158, such as, for example, from a metallic container body upender. An upender is an apparatus known in the art of metallic beverage container body manufacturing to alter the orientation of the metallic beverage container body, typically 90 degrees, from vertical to horizontal.

The infeed assembly 1154 transfers the metallic beverage container bodies 1010 to an indexer 1162. The indexer 1162 transfers the metallic beverage container bodies in a queue, sequentially and individually, through the inspection station 1150 and through actual photographic inspection of the metallic beverage container bodies 1010.

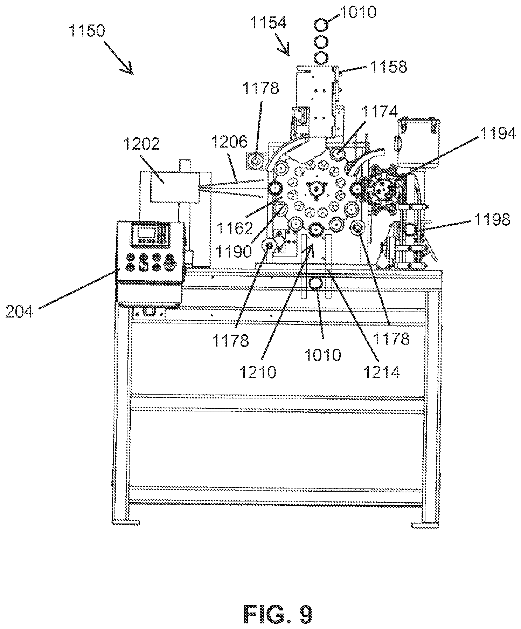

In the inspection station 1150 illustrated in FIGS. 8 and 9, the indexer 1162 includes a star-shaped member having a plurality of legs radiating outwardly from a hub. Any number of legs can be provided as feasibly possible. At a terminal end of each leg, the indexer 1162 has a vacuum chuck 1174. The vacuum chucks 1174 utilize a vacuum pressure to maintain the metallic beverage container bodies 1010 in position as the indexer 1162 indexes them through the inspection process. Thus, the vacuum chucks 1174 are each in fluid communication with a source of fluid pressure. The vacuum pressure is used to attach each metallic beverage container body 1010 to the indexer 1162. Vacuum chucks 1174 of this type have been used on coating apparatuses for a number of years.

The vacuum chucks 1174 are substantially free-wheeling. This enables a spinner belt (not shown) wound around a plurality of idler pulleys 1178 to impart rotational movement to the metallic beverage container bodies 1010 attached to the vacuum chucks 1174. One of the idler pulleys 1178 is operably joined to a spinner motor which in turn drives the spinner belt. One or more spinner gears may be provided to control the revolutions per minute of the metallic beverage container bodies 1010.

One of the pulleys 1178 may be a cogged pulley to better ensure that the metallic beverage container body has spun 360 degrees. Here, the spinner belt would be provided with gears or teeth which fit within or otherwise engage the cogs on the pulley. This can also be incorporated on the vertical inspection station.

Each vacuum chuck 1174 comprises a spinner platen (also called a chuck nose). The chuck nose actually screws in and out using a threaded boss, making it easier to be properly positioned. This can be used on the vertical inspection station as well.

The indexer 1162 may further include an index turret 1186. The index turret comprises two plates, each supporting an end of the metallic beverage container body 1010, generally produced from a polymeric material, and having a plurality of recesses 1190 associated with the terminal end of each leg. The recesses 1190 are arcuate in shape for supporting a sidewall of the metallic beverage container bodies 1010 thereon.

The transfer turret 1194 receives metallic beverage container bodies 1010 from the indexer 1162. This transfer typically occurs at the 270 degree index position in a counterclockwise cycle by the indexer 1162, or the three o'clock position using a time clock reference. The transfer turret 1194 transports inspected metallic beverage container bodies 1010 in a clockwise rotation to the delivery chute 1198 at a 180 degree index position or a three o'clock position using a time clock reference. Metallic beverage container bodies 1010 exit the inspection station 1150 via a delivery chute 1198 for further processing, packaging and delivery, filling, etc.

A camera array 1202 is mounted to the inspection station 1150. The metallic beverage container bodies 1010 are indexed counterclockwise to a dwell position aligned with the camera array 1202, as shown at the nine o'clock (or 90 degree) position. The camera array 1202 includes a plurality of cameras, preferably three to five cameras. The cameras operate as described above relative to the vertical inspection system, stitching individual photographs together to form a composite image of the metallic beverage container body, preferably over the entire 360 degree circumference of the metallic beverage container body. The frames or photographs are taken as the metallic beverage container bodies spin continuously. The software and computer hardware described above can also be associated with or used in conjunction with the horizontal inspection station 1150.

As illustrated in FIG. 9, a field of vision 1206 shows a region in which the camera array 1202 is able to inspect the metallic beverage container body.

The inspection station 1150 has an auto reject position 1210 located at the six o'clock position of the indexer 1162 At the auto reject position 1210, a metallic beverage container body that fails an inspection or quality standard stored in a memory of a computer and against which the composite image is compared is rejected. A metallic beverage container body that fails to meet the quality standard falls vertically straight down into a reject chute 1214 as the vacuum pressure delivered via the vacuum chuck 1174 is at least momentarily ceased, and optionally a small air pressure on the order of about 10 psi is used to remove the metallic container body from the vacuum chuck 1174. Gravity then acts on the metallic beverage container body. If the metallic beverage container body is within the quality standard, it continues on the indexer 1162 to the discharge transfer turret 1194. Then it goes out a different exit chute 1198 and into or onto a takeaway conveyor to the next manufacturing process.

There are general differences between the vertical position inspection station and the horizontal inspection station described herein. Most notably, the vertical inspection station holds metallic beverage container bodies in a vertical orientation, while the horizontal inspection station holds the metallic beverage container bodies horizontally. The vertical unit is uniquely designed to inspect metallic beverage container bodies that have a necked-in region terminating at an open end of the metallic beverage container body for quality of the necked-in region. The horizontal inspection station is designed to inspect metallic beverage containers for decorator and or spray coating errors.

The metallic beverage container body reject apparatus on the horizontal inspector station uses gravity to reject the metallic beverage container body, and drop it down a chute with only a small puff of air, ∼10 psi, to help it work faster, while the vertical inspection station uses a blow off, which has a significant puff of air. The vertical inspection station requires a higher air pressure, enough psi that the air pressure actually lifts the metallic beverage container body up and blows it off.

The vertical inspection station is provided with a vacuum infeed, while the horizontal inspection station uses a gravity infeed.

Typically available inspection stations do not stitch the photographs or frames together to create a composite image.

It is important to point out that the inspection stations described herein are in-line inspection stations. That is, all of the metallic beverage container bodies are inspected as they are manufactured, such that the metallic beverage containers do not need to be removed from the manufacturing queue to be individually inspected. The cameras associated with these inspection stations can process on the order of 200-250 metallic beverage container bodies per minute. Mechanically, the inspection stations can process the queue at up to 350 metallic beverage container bodies per minute. Thus, as cameras increase in speed, the inspection stations can process more metallic beverage container bodies faster. Again, these inspection stations are designed to perform 100% inspection of a manufacturing queue.

It should also be understood that these inspection stations can be used to remove some percentage of metallic beverage container bodies from the manufacturing queue for inspection in a high speed manufacturing setting and return the inspected metallic beverage container bodies to the queue, assuming they meet quality standards upon inspection. There would be no human contact.

As used herein, the terms "first," "second," "third," etc. are for illustrative purposes only and are not intended to limit the embodiments in any way. Additionally, the term "plurality" as used herein is intended to indicate any number greater than one, either disjunctively or conjunctively as necessary, up to an infinite number. The terms "joined," 'attached," and/or "connected" as used herein are intended to put or bring two elements together so as to form a unit, and any number of elements, devices, fasteners, etc. may be provided between the joined, attached or connected elements unless otherwise specified by the use of the term "directly" and/or supported by the drawings. The phrase "sequentially aligned" is intended to indicate a manufacturing arrangement wherein items of manufacture can be transferred sequentially between manufacturing stations, and any number of manufacturing stations can be sequentially aligned without regard to the order of the manufacturing steps or processes carried out at each manufacturing station.

While the specific embodiments have been illustrated and described, numerous modifications come to mind without departing from the scope of the accompanying Claims.

## Claims

1. An apparatus for inspecting a metallic beverage container having a closed bottom opposite an open end, a cylindrical sidewall (18) extending upwardly from the bottom to a circumferential shoulder (26), and a neck (28) of reducing diameter extending upwardly from the shoulder, the apparatus comprising:
a circumferential first indexer (154) for sequentially transporting a plurality of metallic beverage containers (10) from a first location to a second location along an indexed path having a plurality of dwell positions wherein each of the plurality of metallic containers pauses at the dwell positions for a predetermined time interval as each of the plurality of metallic beverage containers (10) is sequenced from the first location to the second location, the first indexer (154) comprising a plurality of turntables, each turntable supporting an enclosed bottom portion of the metallic beverage container (10) and rotational about a generally vertical axis for transferring rotation to the metallic beverage container, each turntable further transferred by the first indexer (154) along the indexed path from the first location to the second location; and
an image recorder (200i) aimed at one of the dwell positions for capturing a plurality of images about a circumference of each of the plurality of metallic beverage containers as each of the plurality of metallic beverage containers completes at least one full rotation about the generally vertical axis during the predetermined time interval.

2. The apparatus of Claim 1 further comprising:
a computer system (204) having a memory, the computer system (204) in communication with the image recorder and receiving images of the metallic beverage container from the image recorder.

3. The apparatus of Claim 2 further comprising:
a first software routine for stitching the plurality of images together to form a composite of a full circumference of each metallic beverage container.

4. The apparatus of Claim 3 further comprising:
a second software routine for identifying manufacturing defects on the composite.

5. The apparatus of Claim 4 further comprising:
another image recorder aimed at a second dwell position of the plurality of dwell positions for capturing a plurality of images about a circumference of each of the plurality of metallic beverage containers as each of the plurality of metallic beverage containers completes at least one full rotation about the generally vertical axis during the predetermined time interval.

6. The apparatus of Claim 4 further comprising:
an ejector positioned along the indexed path and activated by a third software routine stored in the memory of the computer system (204) wherein activation of the ejector removes an individual metallic beverage container from the inspection station when the second software routine identifies a manufacturing defect on the individual metallic beverage container.

7. The apparatus of Claim 6 wherein the ejector receives a fluid pressure from a source of fluid pressure in response to a signal originating from the computer system (204).

8. The apparatus of Claim 7 wherein the ejector is a blow-off nozzle.

## Patentansprüche

1. Vorrichtung zum Prüfen eines Getränke-Metallbehälters, der einen geschlossenen Boden hat, welcher einem offenen Ende gegenüberliegt, eine zylindrische Seitenwand (18), die sich vom Boden zu einer umlaufenden Schulter (26) nach oben erstreckt, und einen Hals (28) mit abnehmendem Durchmesser, der sich von der Schulter nach oben erstreckt, wobei die Vorrichtung aufweist:
einen umlaufenden ersten Indizierer (154) zum sequenziellen Transportieren einer Vielzahl von Getränke-Metallbehältern (10) von einer ersten Stelle an eine zweite Stelle entlang eines indizierten Pfads, der eine Vielzahl von Verweilpositionen hat, wobei jeder der Vielzahl von Metallbehältern für ein vorgegebenes Zeitintervall an den Verweilpositionen verharrt, während jeder der Vielzahl von Getränke-Metallbehältern (10) von der ersten Stelle an die zweite Stelle sequenziert wird, wobei der erste Indizierer (154) eine Vielzahl von Drehplatten aufweist, wobei jede Drehplatte einen umschlossenen Bodenabschnitt des Getränke-Metallbehälters (10) stützt und sich um eine im Allgemeinen vertikale Achse dreht, um Drehung auf den Getränke-Metallbehälter zu übertragen, wobei jede Drehplatte des Weiteren von dem ersten Indizierer (154) entlang des indizierten Pfads von der ersten Stelle an die zweite Stelle übertragen wird; und
ein Bildaufzeichnungsgerät (200i), das auf eine der Verweilpositionen gerichtet ist, um eine Vielzahl von Bildern um einen Umfang jedes der Vielzahl von Getränke-Metallbehältern aufzunehmen, während jeder der Vielzahl von Getränke-Metallbehältern während des vorgegebenen Zeitintervalls wenigstens eine volle Umdrehung um die im Allgemeinen vertikale Achse durchführt.

2. Vorrichtung nach Anspruch 1, die des Weiteren aufweist:
ein Computersystem (204), das einen Speicher hat, wobei das Computersystem (204) mit dem Bildaufzeichnungsgerät in Verbindung steht und Bilder des Getränke-Metallbehälters von dem Bildaufzeichnungsgerät empfängt.

3. Vorrichtung nach Anspruch 2, die des Weiteren aufweist:
eine erste Software-Routine zum Zusammensetzen der Vielzahl an Bildern, um eine Zusammensetzung eines vollen Umfangs jedes Getränke-Metallbehälters zu bilden.

4. Vorrichtung nach Anspruch 3, die des Weiteren aufweist:
eine zweite Software-Routine zum Erkennen von Herstellungsdefekten an der Zusammensetzung.

5. Vorrichtung nach Anspruch 4, die des Weiteren aufweist:
ein weiteres Bildaufzeichnungsgerät, das auf eine zweite Verweilposition der Vielzahl von Verweilpositionen gerichtet ist, um eine Vielzahl von Bildern um einen Umfang jedes der Vielzahl von Getränke-Metallbehältern aufzunehmen, während jeder der Vielzahl von Getränke-Metallbehältern während des vorgegebenen Zeitintervalls wenigstens eine volle Umdrehung um die im Allgemeinen vertikale Achse durchführt.

6. Vorrichtung nach Anspruch 4, die des Weiteren aufweist:
eine Ausstoßvorrichtung, die entlang des indizierten Pfads positioniert ist und von einer dritten Software-Routine aktiviert wird, die in dem Speicher des Computersystems (204) gespeichert ist, wobei die Aktivierung der Ausstoßvorrichtung einen einzelnen Getränke-Metallbehälter aus der Prüfstation ausstößt, wenn die zweite Software-Routine einen Herstellungsdefekt an dem einzelnen Getränke-Metallbehälter feststellt.

7. Vorrichtung nach Anspruch 6, wobei die Ausstoßvorrichtung einen Fluiddruck von einer Fluiddruckquelle im Ansprechen auf ein Signal erhält, das von dem Computersystem (204) stammt.

8. Vorrichtung nach Anspruch 7, wobei die Ausstoßvorrichtung eine Ausblasdüse ist.

## Revendications

1. Appareil d'inspection d'un récipient métallique pour boisson ayant un fond fermé opposé à une extrémité ouverte, une paroi cylindrique (18) s'étendant vers le haut depuis le fond jusqu'à un épaulement circonférentiel (26) et un col (28) de réduction de diamètre s'étendant vers le haut depuis l'épaulement, l'appareil comprenant :
un premier indexeur circonférentiel (154) pour transporter successivement plusieurs récipients métalliques pour boisson (10) depuis un premier emplacement à un deuxième emplacement le long d'un chemin indexé ayant plusieurs positions d'arrêt, où chacun des plusieurs récipients métalliques s'arrêt aux positions d'arrêt pendant un intervalle de temps prédéterminé lorsque chacun des plusieurs récipients métalliques pour boisson (10) est séquencé depuis le premier emplacement au deuxième emplacement, le premier indexeur (154) comprenant plusieurs platines, chaque platine soutenant une partie inférieure enclose du récipient métallique pour boisson (10) et tournant autour d'un axe généralement vertical pour transférer une rotation au récipient métallique pour boisson, chaque platine étant en outre transférée par le premier indexeur (154) le long du chemin indexé depuis le premier emplacement au deuxième emplacement ; et
un enregistreur d'images (200i) dirigé vers une des positions d'arrêt pour saisir plusieurs images autour d'une circonférence de chacun des plusieurs récipients métalliques pour boisson lorsque chacun des plusieurs récipients métalliques pour boisson effectue au moins une rotation complète autour de l'axe généralement vertical pendant l'intervalle de temps prédéterminé.

2. Appareil selon la revendication 1, comprenant en outre :
un système informatique (204) ayant une mémoire, le système informatique (204) étant en communication avec l'enregistreur d'images et recevant des images du récipient métallique pour boissons depuis l'enregistreur d'images.

3. Appareil selon la revendication 2, comprenant en outre :
une première routine logicielle pour lier ensemble la pluralité d'images afin de former un composite d'une circonférence entière de chaque récipient métallique pour boisson.

4. Appareil selon la revendication 3, comprenant en outre :
une deuxième routine logicielle pour identifier des défauts de fabrication sur le composite.

5. Appareil selon la revendication 4, comprenant en outre :
un autre enregistreur d'images dirigé vers une deuxième position d'arrêt parmi la pluralité de positions d'arrêt afin de capturer plusieurs images autour d'une circonférence de chacun des plusieurs récipients métalliques pour boisson lorsque chacun des plusieurs récipients métalliques pour boisson effectue au moins une rotation complète autour de l'axe généralement vertical pendant l'intervalle de temps prédéterminé.

6. Appareil selon la revendication 4, comprenant en outre :
un éjecteur positionné le long du chemin indexé et activé par une troisième routine logicielle enregistrée dans la mémoire du système informatique (204), l'activation de l'éjecteur enlevant un récipient métallique pour boisson individuel de la station d'inspection quand la deuxième routine logicielle identifie un défaut de fabrication sur le récipient métallique pour boisson individuel.

7. Appareil selon la revendication 6, dans lequel l'éjecteur reçoit une pression de fluide depuis une source de pression de fluide en réponse à un signal en provenance du système informatique (204) .

8. Appareil selon la revendication 7, dans lequel l'éjecteur est une buse de soufflage.
